# EUROPEAN PATENT APPLICATION

(11) **EP 2 522 930 A1**
(43) Date of publication of application: **14.11.2012**
(21) Application number: 11166017.1
(22) Date of filing: 13.05.2011
(51) Int. Cl.: F24J 3/08

(54) **Ground heat exchanger**

(71) Applicant: Uponor Innovation Ab, 73061 Virsbo (SE)
(72) Inventor: Rudolf, Jürgen, 96169, Lauter (DE)
(74) Representative: Huhtanen, Ossi Jaakko

(57) **Abstract**

The invention relates to a ground heat exchanger to be positioned in a borehole (1) in the ground. The ground heat exchanger (2) comprises a flow leg (3) and a heat exchanger leg (4). Yet further the ground heat exchanger (2) comprises a refilling pipe (9) that is permanently attached to a lower part of the ground heat exchanger (2).

## Description

### FIELD OF THE INVENTION

The invention relates to a ground heat exchanger to be positioned in a borehole in the ground, the ground heat exchanger comprising a flow leg and a heat exchanger leg.

### BACKGROUND OF THE INVENTION

Ground heat exchangers are used as heat transfer units in heating or cooling systems utilizing the ground as a heat source or as heat storage. In the heating systems the ground heat exchangers are used for collecting heat present in the ground and for conveying or carrying it for warming the building, for example. In the cooling systems the ground heat exchangers are used for conveying or carrying extra heat present in the building and for transferring it to the ground.

A borehole is formed for the ground heat exchanger and the ground heat exchanger is positioned in the borehole. After the ground heat exchanger is positioned in the borehole the borehole is filled with grout or any other suitable refilling material. Document WO 2005/003648 discloses a solution wherein a ground heat exchanger is pushed into the borehole with a tremie pipe. The tremie pipe has a bottom opening through which grout is bumped into the borehole. It is very challenging to ensure that the borehole will be filled completely. For example ensuring that the tremie pipe would be positioned to a position low enough in the borehole is very challenging. If the tremie pipe is not in a low enough position there is a risk that the borehole will not be filled completely. It is also sometimes very difficult to assemble the tremie pipe with the ground heat exchanger and therefore the assembly may take a long time.

### BRIEF DESCRIPTION OF THE INVENTION

An object of the present invention is to provide a new type of ground heat exchanger.

The ground heat exchanger according to the invention is characterized in that the ground heat exchanger further comprises at least one refilling pipe that is permanently attached to a lower part of the ground heat exchanger.

A ground heat exchanger intended to be positioned in a borehole in the ground comprises a flow leg and a heat exchanger leg. The ground heat exchanger further comprises a refilling pipe that is permanently attached to a lower part of the ground heat exchanger. The solution provides the advantages that the borehole will be refilled reliably. The refilling step is fast, certain and reliable. The refilling step requires no additional steps for mounting a refilling pipe.

### BRIEF DESCRIPTION OF THE DRAWINGS

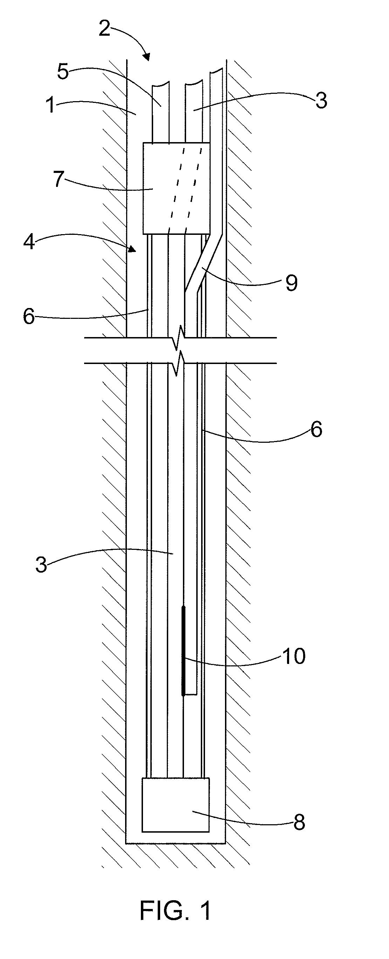

In the following, the invention will be described in greater detail by means of preferred embodiments with reference to the attached drawings, in which
Figure 1 shows schematically a side view of a ground heat exchanger.

### DETAILED DESCRIPTION OF THE INVENTION

Figure 1 shows partly in cross-section a side view of a ground heat exchanger 2 positioned in a borehole 1. In the following, the ground heat exchanger 2 may also be called an exchanger 2. The exchanger 2 comprises a flow leg 3, a heat exchanger leg 4, an upper manifold 7 and a lower manifold 8. The upper manifold 7 is positioned in the upper part of the borehole 1, and the lower manifold 8 is positioned at the bottom of the borehole 1. The flow leg 3 extends from the upper part of the borehole 1 through the upper manifold 7 to the lower manifold 8. The heat exchanger leg 4 comprises an outlet pipe 5 extending upwards from the upper manifold 7 and a plurality of heat exchanger pipes 6 between the upper manifold 7 and the lower manifold 8. The heat exchanger pipes surround the flow leg 3. The lower manifold 8 connects the flow leg 3 and the heat exchanger leg 4 together by dividing the heat transfer fluid flow in the flow leg 3 into smaller volume flows for the heat exchanger pipes 6.

The basic operation principle of the ground heat exchanger 2 above is as follows. The flow leg 3 forwards the flow of heat transfer fluid from an overground cooling system, which may be, for example, a heat pump, to the ground heat exchanger 2, and especially to the lower manifold 8. The overground cooling system is not shown in Figure 1 for the sake of clarity. The heat transfer fluid may be, for example, water or a mix of water and ethanol with a mixing ratio of 65/35 %, for example. In the lower manifold 8 the flow of the heat transfer fluid flowing in the flow leg 3 is divided into smaller volume flows for the heat exchanger pipes 6. In the heat exchanger pipes 6 the heat transfer fluid flows upwards from the lower manifold 8 towards the upper manifold 7. In the upper manifold 7 the smaller volume flows of the heat transfer fluid are combined into one larger volume flow flowing in the outlet pipe 5 of the heat exchanger leg 4 towards the overground heating system. The flow of the heat transfer fluid may be generated by one or more pumps, for example, which may be integrated inside the cooling system or separated from the actual cooling system. If the ground heat exchanger 2 is used in connection with a heating system, the direction of the flow of the heat transfer fluid is opposite to that explained above.

When the heat transfer fluid flows in the heat exchanger pipes 6, it either collects or receives heat from the ground or transfers or delivers heat to the ground. If the overground system is used for heating, the temperature of the heat transfer fluid flowing in the heat exchanger pipes 6 is quite low, whereby the temperature of the heat transfer fluid is lower than the ground temperature and the fluid has an ability to receive heat from the ground. If the overground system is used for cooling, the temperature of the heat transfer fluid flowing in the heat exchanger pipes 6 may be quite high, in any case higher than the ground temperature, whereby the heat transfer fluid delivers heat energy to the ground and cools down.

Further, Figure 1 shows only two heat exchanger pipes 6 from the lower manifold 8 to the upper manifold 7 but in practice the ground heat exchanger 2 comprises as many heat exchanger pipes 6 as possible so that the surface area of the wall of the borehole 1 is covered by the heat exchanger pipes 6 as effectively as possible for maximizing the heat transfer ability of the ground heat exchanger 2.

The ground heat exchanger 2 further comprises a refilling pipe 9. The end of the refilling pipe 9 is permanently attached to a lower part of the ground heat exchanger 2. Thus the lower end of the refilling pipe 9 is closer to the lower manifold 8 than the upper manifold 7. The distance between the lower end of the refilling pipe 9 and the upper end of the lower manifold 8 can be about 0.25 - 1 m, for example.

The refilling pipe 9 is permanently attached to the flow leg 3. In the embodiment disclosed in Figure 1 the flow leg 3 is the central pipe that is surrounded by the heat exchanger pipes 6 between the lower manifold 8 and upper manifold 7. A welding which is denoted by reference numeral 10 in Figure 1 is an example of permanently attaching the refilling pipe 9 to the flow leg 3. Another example of permanent attaching means is gluing. Because the refilling pipe 9 is permanently attached, the ground heat exchanger 2 comprises the refilling pipe already when it is transported to the assembly site. Thus there is no need to make any attaching operations or cumbersome assembly operations concerning the refilling pipe on site.

The ground heat exchanger 2 comprises at least one refilling pipe 9. It is also possible to provide the ground heat exchanger 2 with two or more refilling pipes. If two or more refilling pipes are used, the lower end can be positioned at the same position or one or more refilling pipes 9 can be positioned such that their lower end is in an upper position than the lowermost end of the lowest refilling pipe. In such a case the grout is first supplied to the refilling pipe that has its end at the lowermost position such that the borehole 1 is filled starting from its bottom end, whereby the borehole is filled completely and reliably.

The inner diameter of the refilling pipe 9 depends on the length of the ground heat exchanger 2. The inner diameter of the refilling pipe 9 can vary between 20 mm and 40 mm, for example, when the length of the ground heat exchanger varies from 50 m to 250 m, for example.

The material of the refilling pipe can be plastic, such as polyethylene PE or polypropylene PP, for example, or any other suitable material. The refilling pipe 9 can also be flexible to some extent, whereby the refilling pipe 9 can also be called a re-filling hose.

The refilling pipe 9 may have an optical marking such that it can be differentiated from the other pipes of the ground heat exchanger 2. The refilling pipe 9 may have a different colour than the other pipes of the ground heat exchanger 2. The refilling pipe can also have a colour line or text or figure pattern or a sticker that differentiates it from the other pipes of the ground heat exchanger 2.

It is possible to attach the refilling pipe also to one or more of the heat exchanger pipes 6. However, the flow leg 3 is larger than the heat exchanger pipes 6 and it is positioned in the middle of the ground heat exchanger. Therefore, attaching the refilling pipe 9 to the flow leg 3 is preferable. The refilling pipe 9 should not substantially enlarge the outer dimension of the ground heat exchanger 2 because a larger outer dimension of the ground heat exchanger 2 would require a larger diameter for the borehole 1. Therefore it is not preferable to attach the refilling pipe 9 outside the pipes 6 in the ground heat exchanger 2.

The ground heat exchanger can also be formed such that it has a simple structure having a flow leg and a heat exchanger leg which form a U-shaped ground heat exchanger. In such a case there is no difference whether the refilling pipe is attached to the flow leg or the heat exchanger leg.

In some cases the features set forth in this description may be used as such, irrespective of other features. On the other hand, features set forth in this description may be combined, where necessary, to provide various combinations.

It will be obvious to a person skilled in the art that, as the technology advances, the inventive concept can be implemented in various ways. The invention and its embodiments are not limited to the examples described above but may vary within the scope of the claims.

## Claims

1. A ground heat exchanger (2) to be positioned in a borehole (1) in the ground,
the ground heat exchanger (2) comprising a flow leg (3), and
a heat exchanger leg (4),
**characterized in that** the ground heat exchanger (2) further comprises at least one refilling pipe (9) that is permanently attached to a lower part of the ground heat exchanger (2).

2. Ground heat exchanger according to claim 1, **characterized in that** the ground heat exchanger (2) further comprises an upper manifold (7) and a lower manifold (8) to be positioned at the bottom of the borehole (1), the flow leg (3) extending from the upper part of the borehole (1) to the lower manifold (8), the heat exchanger leg (4) comprising an outlet pipe (5) extending upwards from the upper manifold (7) and a plurality of heat exchanger pipes (6) between the upper manifold (7) and the lower manifold (8), the lower manifold (8) connecting the flow leg (3) and the heat exchanger leg (4).

3. Ground heat exchanger according to claim 2, **characterized in that** that a refilling pipe (9) is attached to the flow leg (3) in a position between the upper manifold (7) and the lower manifold (8).

4. Ground heat exchanger according to any one of the preceding claims, **characterized in that** the refilling pipe (9) comprises an optical marking for differentiating it from the other pipes of the ground heat exchanger (2).
